# EUROPÄISCHE PATENTANMELDUNG

(11) **EP 0 583 508 A1**
(43) Veröffentlichungstag der Anmeldung: **23.02.1994**
(21) Anmeldenummer: 92120698.3
(22) Anmeldetag: 04.12.1992
(51) Int. Cl.: B29C 45/64, B29C 33/24

(54) **Verfahren und Vorrichtung zum automatischen Schliessen Verriegeln und Öffnen einer geteilten Giessform zum Herstellen von Kunststoffartikeln**

(30) Priorität: 14.08.1992 DE 4227031
(71) Anmelder: DR. SPIESS KUNSTSTOFF-RECYCLING GmbH & Co., D-67271 Kleinkarlbach (DE)
(72) Erfinder: Attilo, Guiseppe, W-6718 Grünstadt (DE); Rydmann, Theo, W-6719 Hettenleidelheim (DE); Schibalsky, Manfred, W-6520 Worms-Herrnsheim (DE)

(57) **Zusammenfassung**

Eine Gießanlage für Gegenstände aus Kunststoff-Recycling, bestehend aus einem Gestellbock (36), welcher den unteren Tragrahmen (5) mit der unteren festen Formhälfte (6) trägt und einer über Säulen (37) an diesem befestigten Jochbrücke (8), welche den oberen Tragrahmen (7) mit der beweglichen Formhälfte (1) trägt. Durch einen an der Jochbrücke (8) gelagerten Arbeitszylinder (10) wird die bewegliche Formhälfte (1) in Schließposition (19) zur unteren ortsfesten Formhälfte (6) gebracht. An beiden Formhälften (1,6) sind Verriegelungselemente (13) und Nachspannkörper angeordnet, welche eine feste Verbindung für die beiden Formhälften (1,6) während des Füllvorganges bewirken. Nach Beendigung des Füllvorganges und entsprechender Abkühlzeit wird die Verriegelung gelöst und die bewegliche Formhälfte (1) in die Entleerungsposition gebracht. Eine programmierbare Steuerzentrale steuert alle Bewegungsvorgänge vollautomatisch.

## Beschreibung

Die Erfindung betrifft ein Verfahren zum automatischen Schließen, Verriegeln und Öffnen einer geteilten Gießform zum Herstellen von Kunststoffartikeln, insbesondere von größeren Gegenständen aus Kunststoff-Recycling-Material und eine Vorrichtung zur Durchführung des Verfahrens.

In der EP 0 221 872 A2 ist eine Sperr- und Öffnungsvorrichtung für eine Kunststoff-Gießform offenbart. Von einem Hydraulikzylinder ist über einem an der unteren Formhälfte angeordneten Drehpunkt die bewegliche Formhälfte abhebbar, wodurch das Öffnen und Schließen der Kunststoff-Gießform bewirkt wird. Ein weiterer, an der beweglichen Formhälfte gelagerter Hydraulikzylinder ist mit einem an der beweglichen Formhälfte drehbar gelagerten doppelarmigen Hebel gelenkig verbunden, welcher am anderen freien Ende einen scheibenförmigen Schließkörper trägt. Dieser Schließkörper hintergreift einen mit der unteren Formhälfte fest verbundenen Ansatz, wodurch die Kunststoffgießform in der geschlossnen Position verriegelbar ist.Durch einen Endschalter ist die Schließbewegung abschaltbar. Diese Vorrichtung ist lediglich für Kunststoffgießformen kleinerer Abmessungen brauchbar. Bei größeren Formen ist eine möglichst wagrechte Abhebung der beweglichen Formhälfte beim Entformen sowie ein Nachspannen der Verriegelung erforderlich, um dem hohen Fülldruck der beanspruchten Gießform zu wiederstehen.

In der US-PS 4 643 663 ist eine geteilte Gießform beschrieben, wobei die bewegliche Formhälfte mittels einem oder mehrerer Hydraulikzylinder in Schließ- bzw. in Entleerungsposition gebracht wird. Ein Verriegeln und Nachspannen der Verriegelung ist jedoch nicht vorgesehen,so daß die Anordnung für große mit Kunststoff-Recycling befüllte Gießformen nicht geeignet ist.

Die EU-PS 0 381 770 A1 zeigt hingegen eine Gießform, wobei die bewegliche Formhälfte durch vier Gewindespindeln, die mit der gleichen Anzahl Hubmuttern korrespondieren, die drehbar, jedoch unverschiebbar in der beweglichen Formhälfte gelagert sind und synchron von einem Getriebemotor angetrieben werden, in die Offen- und Schließstellung gebracht werden. Auch in diesem Falle ist keine Verriegelung und kein Nachspannen der beiden Formhälften vorgesehen, so daß auch diese Ausführung zur Herstellung großflächiger Gegenstände aus Kunsstoff-Recycling nicht geeignet ist.

Aufgabe der Erfindung ist es, das Schließen, Verriegeln, Nachspannen der Verriegelung und Öffnen einer geteilten, großen Gießform für Kunststoff-Recycling-Material durch eine vorprogrammierbare Steuerzentrale automatisch durchzuführen.

Diese Aufgabe wird durch den kennzeichnenden Teil des Anspruchs 1 gelöst.

Durch einen Bewegungsmechanismus wird die bewegliche Formhälfte parallel zur Trennebene in Schließposition gebracht, wo die beiden Formhälften durch einen Verriegelungsmechanismus nachspannbar miteinander verriegelt werden. Nach dem Füllvorgang der Gießform werden durch eine programmierbare Steuerzentrale und nach Ablauf des vorgeschriebenen Zeitintervalls die Verriegelungselemente zum Entriegeln und der Bewegungsmechanismus zum Öffnen der Gießform automatisch angesteuert, ebenso, wie der Entleerungsvorgang der Gießform, das erneute Schließen, Verriegeln und Nachspannen der Verriegelung durch die Steuerzentrale nach der eingegebenen Programmierung automatisch abläuft.

Eine Vorrichtung zum automatischen Schließen, Verriegeln und Nachspannen der Verriegelung sowie das Öffnen der geteilten Gießform von einer programmierbaren Steuerzentrale kann in einem unteren Tragrahmen eine fest verankerte untere Formhälfte aufweisen und in einem oberen Tragrahmen kann die bewegliche Formhälfte angeordnet sein, so daß das Öffnen und Schließen der Gießform in vertikaler Richtung erfolgt. Diese Anordnung ist für die Entformung günstiger.

Ferner kann am unteren Tragrahmen eine Jochbrücke oder mindestens eine Gewindespindel befestigt sein. Die Jochbrücke dient zur Aufnahme eines Arbeitszylinders oder der Hubmuttern zum Bewegen des oberen Tragrahmens, welcher die bewegliche Formhälfte trägt. Im anderen Falle, wenn die Gewindespindeln am unteren Tragrahmen befestigt sind, sind die Hubmuttern in der beweglichen Formhälfte oder im oberen Tragrahmen installiert. Die Hubmuttern sind in den o.a. Teilen drehbar jedoch unverschiebbar gelagert und werden von einem Getriebemotor synchron angetrieben.

Die Gewindespindeln können aber auch mit dem oberen Tragrahmen ortsfest verbunden sein. In diesem Falle sind die Hubmuttern in der Jochbrücke drehbar, jedoch unverschiebbar gelagert und werden durch einen Getriebemotor synchron angetrieben.

Außerdem kann der Getriebemotor oder der Arbeitszylinder über einen Endschalter abschaltbar sein. Um einen gewissen Anpreßdruck in den Endstellungen der Schließ- und Entleerungsposition zu gewährleisten, kann der Getriebemotor mit einer Drehmomentkupplung ausgestattet sein.

Darüber hinaus können bei geschlossenen Formhälften Verriegelungselemente in Nachspannkörper eingreifen, wodurch die beiden geschlossenen Formhälften fest miteinander verriegelt und verspannt werden.

Ferner können die Verriegelungselemente von einem oder mehreren zeitlich steuerbaren Hydraulikzylinder bzw. Hydraulikzylindern bewegbar sein. Dadurch ist der Grad der Abkühlung der gefüllten Form bestimmbar.

Des weiteren kann der bewegliche Tragrahmen mitsamt der beweglichen Formhälfte in einer Führung gleiten. Dadurch wird die erforderliche Passgenauigkeit in der Schließposition der Formhälften erreicht.

Darüber hinaus können die Verriegelungselemente durch an der beweglichen Formhälfte angeordnete Nachspannkörper nachspannbar sein und die Nachspannkörper können aus von einem Hydraulikdrehzylinder bewegten Exzenterwellen bestehen.

Außerdem können an der oberen Formhälfte Verriegelungsbolzen angeordnet sein; und die Verriegelungsbolzen können halbkreisförmige Ausnehmungen aufweisen.

Hierzu können an der unteren Formhälfte hydraulisch verdrehbare Verriegelungswellen angeordnet sein; und es können die Verrriegelungswellen mit den Verriegelungsbolzen korrespondierende Ausfräsungen aufweisen. Auch mit dieser Anordnung ist ein Verriegeln der beiden Formhälften sowie ein Nachspannen der Verriegelung erzielbar.

Nach einen anderen Ausführungsbeispiel können die Verriegelungsbolzen im Endbereich eine Ringnut aufweisen und es kann an der unteren Formhälfte bzw. am unteren Tragrahmen ein verschiebbar angeordneter Verriegelungsrahmen gelagert sein, welcher hydraulisch oder pneumatisch betätigbar ist. Der Verriegelungsrahmen weist mit den Verriegelungsbolzen korrespondierende Bohrungen auf, die zu Langlöchern erweitert sind, wobei das erweiterte Langlochteil in der lichten Weite kleiner gehalten ist als die Bohrung. Durch Verschieben des Verriegelungsrahmens bei geschlossenen Formhälften greifen die Seitenteile des engeren Langlochs in die Ringnuten der Verriegelungsbolzen ein. Durch eine Anschrägung der in die Ringnuten eingreifenden Seitenteile der Langlöcher kann eine Verspannung der beiden Formhälften erzielt werden.

Nach einem weiteren Ausführungsbeispiel können im Bereich der Trennebene der beiden Formhälften sich nach innen verengende, die Trennebene übergreifende Nuten, vorzugsweise in Rinform, angeordnet sein, in welche Verbindungsglieder, in gleicher geometrischer Form wie die Nuten, durch ein Bewegungselement ein- und ausbringbar sind. Das Bewegungselement kann hydraulisch betätigbar sein, es kann aber auch pneumatisch oder mechanisch über einen Exzenterhebel bzw. über ein Kniegelenk betätigbar sein. Dadurch ist es möglich, die Verriegelungselemente von einer Steuerzentrale aus zu steuern. Die Flanken der Nut können sich hierbei um einen Zentriwinkel von etwa 14^{o} verengen, denn bei einem Halbierungswinkel von etwa 7^{o} hört die Selbsthemmung auf, so daß das Verbindungsglied in der Nut nicht haftet und sich leicht bewegen läßt. Auch das Verbindungsglied selbst kann im denselben Zentriwinkel konisch ausgebildet sein und zwar an der Außenkontur des konischen Teils. Dadurch ist die Möglichkeit des Nachspannens der Verbindung der beiden Formteile gegeben.

Ferner kann an der unteren Formhälfte ein Angußkopf und ein Abtrennschieber angeordnet sein. Dies hat den Vorteil, daß bei einem geschlossenen Einfüllventil die unter hohem Fülldruck stehende Schmelze nicht nach - fließen und zu Störungen beim nachfolgenden Füllvorgang führen kann.

Schließlich können die Antriebsaggregate von der Steuerzentrale aus zeitlich steuerbar sein.

Zu einem vollautomatischen Betrieb der Anlage gehört selbstverständlich auch das selbsttätige Entformen, wobei die entformten Gegenstände auf ein nichtgezeichnetes Fließband ausgestoßen werden.

Anhand von in der Zeichnung dargestellten Ausführungsbeispielen soll die Erfindung näher erläutert werden.

Es zeigen:
- Fig. 1: eine schematische Darstellung einer Kunststoff-Gießanlage mit geschlossenen und verriegelten Formhälften.
- Fig. 2: ein anderes Ausführungsbeispiel in Entleerungsposition,
- Fig. 3: eine Draufsicht auf Fig. 2,
- Fig. 4: ein Ausschnitt der Lagerung einer Hubmutter in der Jochbrücke,
- Fig. 5: eine Verriegelungsanordnung für die beiden Formhälften mit Nachspanneinrichtung,
- Fig. 6: eine Alternativausführung einer Verriegelung mit Verriegelungsbolzen,
- Fig. 7: dasselbe im verspannten Zustand,
- Fig. 8: eine andere Verriegelung mit einem Verriegelungsrahmen,
- Fig. 9: einen Verriegelungsrahmen in Draufsicht,
- Fig.10: ein Schnitt durch ein anderes Verriegelungselement in Offenstellung,
- Fig.11: daselbe in Verriegelungsstellung,
- Fig.12: eine Teilansicht bei geschlossenen Formhälften,jedoch ohne Verriegelungselement,
- Fig.13: eine mechanische Betätigungsanordnung für das Verriegelungselement.

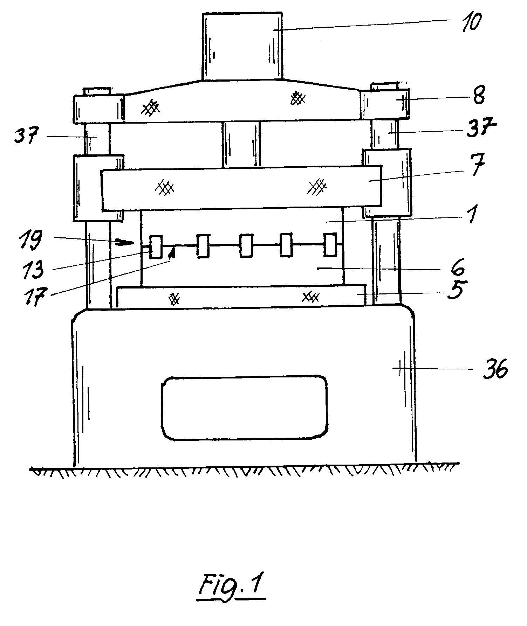

Die in der Fig. 1 dargestellte Kunststoff-Gießanlage besteht aus einem Gestellblock 36, welcher den unteren Tragrahmen 5 mit der unteren festen Formhälfte 6 trägt. Am Gestellblock 36 ist eine Jochbrücke 8 befestigt, welche den oberen Tragrahmen 7 für die bewegliche Formhälfte 1 trägt. Ein auf der Jochbrücke 8 gelagerter Arbeitszylinder 1o steht mit dem oberen Tragrahmen 7 in Verbindung und bringt die mit diesem verbundene bewegliche Formhälfte 1 in Schließ- und Entleerungsposition 19,20. Der obere Tragrahmen 7 gleitet in einer Führung 16 auf den Säulen 37 der Jochbrücke 8, so daß die bewegliche Formhälfte 1 präzise in Schließposition 19 gebracht wird. An den beiden Formhälften 1,6 sind die Verriegelungselemente 13 und die Nachspannkörper 14 angeordnet.

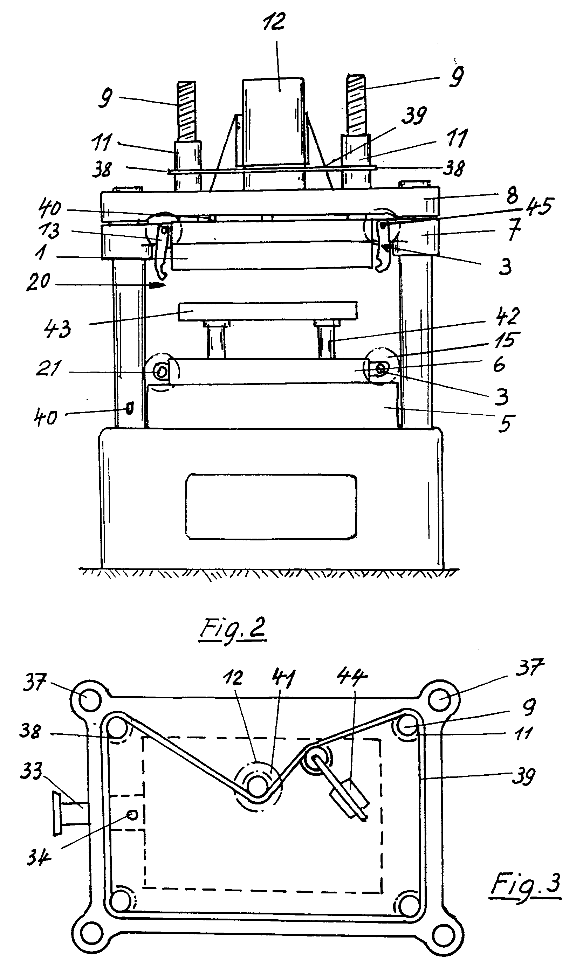

Die Fig. 2 zeigt ein anderes Ausführungsbeispiel einer Kunststoff-Gießanlage. Im oberen Tragrahmen 7 sind vorzugsweise vier Gewindespindeln 9 befestigt, die mittels eben so vielen in der Jochbrücke 8 drehbar, aber unverschiebbar gelagerten Hubmuttern 11 in Eingriff stehen. Die Hubmuttern 11 tragen je ein Antriebsrad 38. Die Antriebsräder 38 sind durch Antriebselemente 39, wie z.B. eine Zahnkette miteinander verbunden und stehen mit einem Getriebemotor 12 in Verbindung. Der Getriebemotor 12 ist für Links- und Rechtsdrehung eingerichtet. So kann die bewegliche Formhälfte 1 in Schließposition 19 und in die Entleerungsposition 20 gebracht werden. Die Endschalter 40 begrenzen den Hub nach der einen wie nach der anderen Position. Zwischen dem Getriebemomotor 12 und den Antriebselementen 39 kann eine Drehmomentkupplung 41 zwischengeschaltet sein. Damit kann ein bestimmter Anpreßdruck in den Endstellungen der beweglichen Formhälfte 1 eingehalten werden, Erst nach dem Ausrasten der Drehmomentkupplung 41 wird der Endschalter 40 betätigt. Durch Stößel 42 wird der Formling 43 automatisch in der Entleerungsposition 20 aus der unteren Formhälfte 6 herausgehoben und kann auf ein nichtgezeichnetes Transportband gebracht werden.

Die Fig. 3 zeigt eine Anordnung der Gewindespindeln 9 mit den Hubmuttern 11. Ein Getriebemotor 12 treibt mittels der Antriebselemente 39 über die Antriebsräder 38 die Hubmuttern 11 an. Eine Spannvorrichtung 44 für die Antriebselemente 39 bewirkt ein gleichmäßiges Bewegen der Hubmuttern 11.

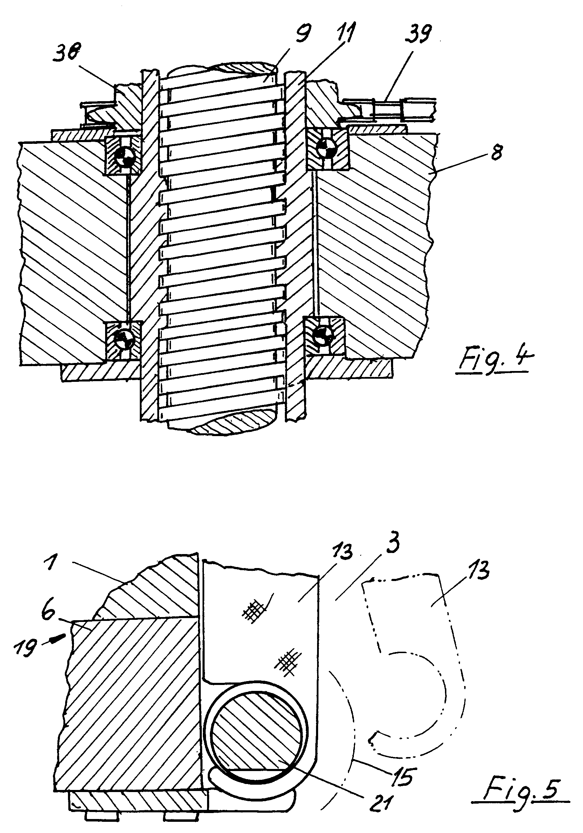

Die Fig. 4 zeigt einen Ausschnitt der Lagerung einer Hubmutter 11 in der Jochbrücke 8.

Wie aus den Fig. 2 und 5 zu ersehen ist, besteht der Verriegelungsmechanismus 3 aus an der beweglichen Formhälfte 1 bzw. am oberen Tragrahmen 7 angelenkten Verriegelungselementen 13, die an einer Welle 45 gelagert sind und mittels eines steuerbaren Hydraulikzylinders 15 abgeschwenkt werden können, so daß diese eine an der unteren Formhälfte 6 angeordnete Exzenterwelle 21 hintergreifen kann. Diese Exzenterwelle 21 dient als Nachspannkörper 14 am unteren Tragrahmen 5. Durch Verdrehen der Exzenterwelle 21 durch einen Hydraulikzylinder 15 werden die Verriegelungselemente 13 nachgespannt, wodurch ein fester Sitz der beiden Formhälften 1,6 in der Schließposition 19 erreicht wird.

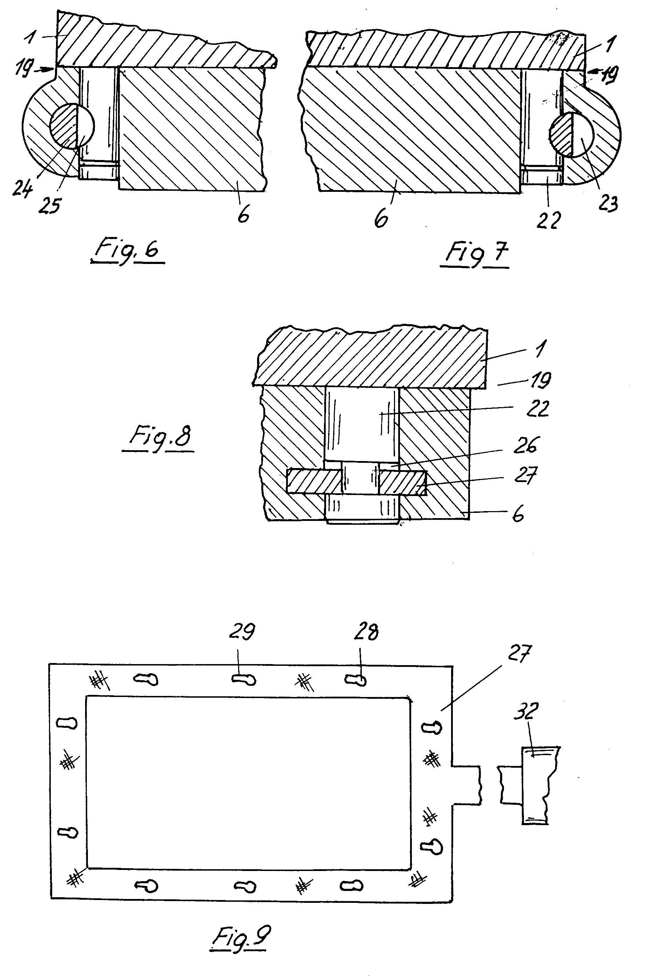

Eine Alternativlösung hierzu zeigen die Fig. 6 und 7. Bei dieser Ausführung sind in der beweglichen Formhälfte 1 Verriegelungsbolzen 22 angeordnet, welche in der Schließposition 19 in Bohrungen der unteren Formhälfte 6 eingreifen. Die Verriegelungsbolzen 22 besitzen eine nach außen gerichtete halbkreisförmige Ausnehmung 23, in welche gleichfalls halbkreisförmige Ausfräsungen 25, die an Verriegelungswellen 24 in mit den Verriegelungsbolzen 22 korrespondierender Lage angeordnet sind. Die Verriegelungswellen 24 sind in der unteren Formhälfte 6 so gelagert, daß dieselben etwas tiefer als die halbkreisförmigen Ausnehmungen 23 der Verriegelungsbolzen 22 liegen.

Beim Verdrehen der Verriegelungswellen 24 erfolgt ein Nachspannen der beweglichen Formhälfte 1 durch die Verriegelungsbolzen 22.

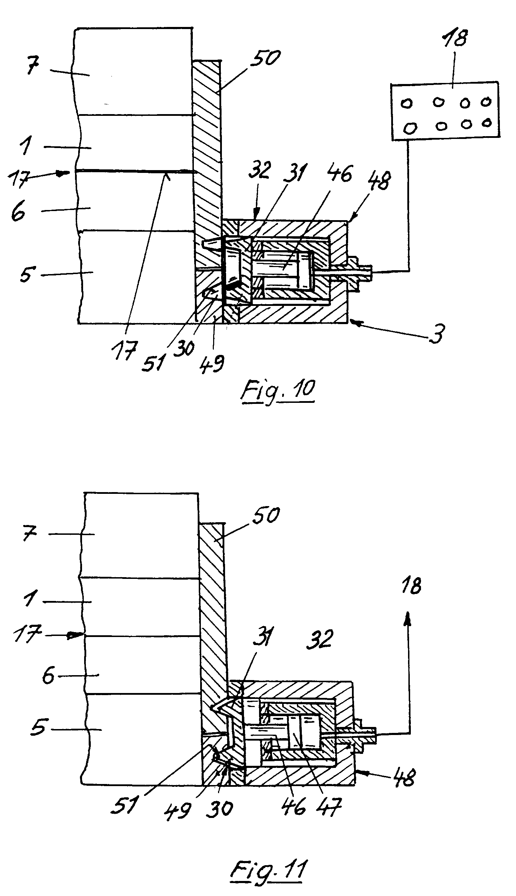

Eine andere Verriegelung zeigt die Fig. 8. Hierbei sind die Verriegelungsbolzen 22 mit einer Ringnut 26 ausgestattet. In diese Ringnuten 26 greift ein an der unteren Formhälfte 6 gelagerter Verriegelungsrahmen 27 ein.

Wie die Fig.9 zeigt, sind im Verriegelungsrahmen 27 Bohrungen 28 angeordnet, welche mit den Verriegelungsbolzen 22 korrespondieren. Die Bohrungen 28 sind zu Langlöchern 29 erweitert, deren lichte Weite kleiner ist als der Durchmesser der Verriegelungsbolzen 22. Die Verriegelungsbolzen 22 sind im Endbereich mit einer Ringnut 26 ausgestattet. In diese Ringnut 26 greifen die Seitenteile der Langlöcher 29 ein, wenn der Verriegelungsrahmen 27 durch ein Antriebsaggregat 35 in entsprechender Richtung verschoben wird. Die Seitenteile der Langlöcher 29 können abgeschrägt ausgeführt sein, so daß beim Verschieben des Verriegelungsrahmens 27 ein Verspannen der beiden Formhälften 1,6 in Schließposition 19 erfolgt.

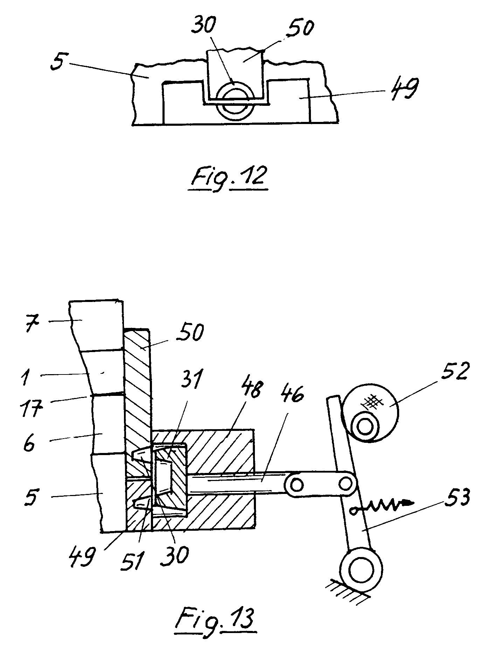

Wie aus der Fig. 10 und 11 zu ersehen ist, besteht der Verriegelungsmechanimus 3 aus einem im Bereich der Trennebene 17 angeordneten Bewegungselement 32. Dieses kann hydraulisch oder pneumatisch von einer Steuerzentrale 18 betätigt werden. An der Betätigungsstange 46 ist das Verbindungsglied 31 angeordnet, das in diesem Falle aus einem topfförmigen Ring besteht. In Richtung der Verbindungsnut 30 läuft das Verbindungsglied 31 konisch aus. Der Zentriwinkel dieses Konusses beträgt etwa 14^{o}, so daß es keine Selbsthemmung gibt, wenn das Verbindungsglied 31 in die Verbindungsnut 30 eingreift. Das Bewegungselement 32 mit dem Kolben 47, welcher unmittelbar die Betätigungsstange 46 mit dem Verbindungsglied 31 betätigt, ist zum Schutze in einem Gehäuse 48 untergebracht. An der unteren Formhälfte 6 ist ein U-förmiges Verbindungsteil 49 angeordnet, in welches eine an der beweglichen Formhälfte 1 befestigte Lasche 50 eingreift. In Schließposition 19 ist zwischen der Lasche 50 und dem U-förmigen Verbindungsteil 49 noch ein Spielraum von etwa 2mm offen. Dieser Spielraum ist für das Nachspannen erforderlich, wenn das Verbindungsglied 31 in die Verbindungsnut 30 hineingedrückt wird. Es berühren sich hierbei nur die inneren Flanken 51 der Verbindungsnut 30 und des Verbindungsgliedes 31. Zwischen den äußeren Flanken 51 ist ein gewisses Spiel vorhanden. Die Lasche 50 und das Verbindungsteil 31 sind justierbar angeornet.

In Fig. 12 ist ein Teilausschnitt im Bereich des Verriegelungsmechanismusses 3 in der Schließposition 19 dargestellt. Der untere Tragrahmen 5 trägt die untere Formhälfte 6. Das Verriegelungselement 13 ist vorzugsweise am unteren Tragrahmen 5 befestigt, während die Lasche 50 am oberen Tragrahmen 7 oder an der beweglichen Formhälfte 1 befestigt sein kann. Die Lasche 50 greift in das U-förmige Verbindungsteil 49 ein. Sobald die beiden Formhälften 1 und 6 in Schließposition 19 sind, ergänzen sich die Nutteile der Lasche 50 und die Nutteile des U-förmigen Verbindungsteiles 49, hier zu einer Ringform, welche mit der Form des Verbindungsgliedes 31 übereinstimmt. Der Spielraum zwischen der Lasche 50 und dem Verbindungsteil 49 beträgt etwa 2 mm.

Die Fig. 13 zeigt eine Alternativlösung hierzu. Dies kann z.B. durch einen von einem Exzenter 52 betätigten Hebel 53 aus erfolgen.

Selbstverständlich sind auch noch andere Möglichkeiten gegeben, welche aber unter die beanspruchte Kombination eines Bewegungsmechanismusses 2 und eines Verriegelungsmeschanismusses 3 mit Nachspannkörper 14 fallen.

## Patentansprüche

1. Verfahren zum automatischen Schließen, Verriegeln und Öffnen einer geteilten Gießform zum Herstellen von Kunststoffartikeln, insbesondere von größeren Gegenständen aus Kunststoff-Recycling-Material und Vorrichtung zur Durchführung des Verfahrens,
**gekennzeichnet,** daß
a) durch einen Bewegungsmechanismus (2) die bewegliche Formhälfte (1) parallel zur Trennebene (17) der Gießform (4) in Schließ- und Entleerungsposition (19,20) gebracht wird,
b) durch einen Verriegelungsmechanismus (3) die beiden Formhälften ( 1 und 6) in Schließposition (19) nachspannbar verriegelt werden und
c) durch Vorprogrammierung von einer Steuerzentrale (18) aus die Schließ- und Entleerungsstation (19, 20) sowie die Verriegelungselemente (13) und Nachspannkörper (14) automatisch angesteuert werden.

2. Vorrichtung zum automatischen Schließen, Verriegeln und Öffnen einer geteilten Gießform mit einem Bewegungs- und einem Verriegelungsmechanismus,
**dadurch gekennzeichnet,** daß
a) in einem unteren Tragrahmen (5) die untere Formhälfte (6) fest verankert ist,
b) daß in einem oberen Tragrahmen (7) eine bewegliche Formhälfte (1) angeordnet ist.
c) daß am unteren Tragrahmen (5) eine Jochbrücke (8) oder mindestens eine Gewindespindel (9) befestigt ist,
d) daß der obere Tragrahmen (7) mit der Gewindespindel bzw. den Gewindespindeln (9) ortsfest verbunden oder an einem Arbeitszylinder (10) angelenkt ist,
e) daß in der Jochbrücke (8) eine mit der Gewindespindel bzw. mehrere mit den Gewindespindeln (9) korrespondierende Hubmutter bzw. Hubmuttern (11) drehbar, jedoch unverschiebbar gelagert ist bzw. sind, oder daß die Jochbrücke (8) den Arbeitszylinder (10) trägt,
f) daß die Hubmutter bzw. die Hubmuttern (11) von einem Getriebemotor (12) synchron antreibbar ist bzw.sind,
g) daß der Getriebemotor (12) oder der Arbeitszylinder (10) über Endschalter abschaltbar ist.
h) daß bei geschlossenen Formhälften (1,6) Verriegelungselemente (13) in Nachspannkörper (14) eingreifen und die beiden Formhälften (1,6) fest miteinander verriegeln,
i) daß die Verriegelungselemente (13) von einem oder mehreren zeitlich steuerbaren Hydraulikzylinder bzw. Hydraulikzylindern (15) bewegbar sind.
j) daß der obere Tragrahmen (7) mitsamt der bewegglichen Formhälfte (1) in einer Führung (16) gleitet.

3. Vorrichtung nach Anspruch 2, dadurch gekennzeichnet, daß die Verriegelungselemente (13) durch an der beweglichen Formhälfte (1) angeordnete Nachspannkörper (14) nachspannbar sind.

4. Vorrichtung nach Anspruch 3, dadurch gekennzeichnet, daß die Nachspannkörper (14) aus von einem Hydraulikdrehzylinder (15) bewegten Exzenterwellen (21) bestehen.

5. Vorrichtung nach Anspruch 2, dadurch gekennzeichnet, daß an der beweglichen Formhälfte (1) Verriegelungsbolzen (22) angeordnet sind.

6. Vorrichtung nach Anspruch 5, dadurch gekennzeichnet, daß die Verriegelungsbolzen (22) halbkreisförmige Ausnehumungen (23) aufweisen.

7. Vorrichtung nach Anspruch 6, dadurch gekennzeichnet, daß an der unteren Formhälfte (6) hydraulisch verdrehbare Verriegelungswellen (24) angeordnet sind.

8. Vorrichtung nach Anspruch 7, dadurch gekennzeichnet, daß die Verriegelungswellen (24) mit den Verriegelungsbolzen (22) korrespondierende halbkreisförmige Ausfräsungen (25) aufweisen.

9. Vorrichtung nach Anspruch 5, dadurch gekennzeichnet, daß die Verriegelungsbolzen (22) im Endbereich eine Ringnut (26) aufweisen.

10. Vorrichtung nach Anspruch 9, dadurch gekennzeichnet, daß an der unteren Formhälfte (6) ein verschiebbar angeordneter Verriegelungsrahmen (27) gelagert ist.

11. Vorrichtung nach Anspruch 10, dadurch gekennzeichnet, daß der Verriegelungsrahmen (27) mit den Verriegelungsbolzen (22) korrespondierende Bohrungen (28) aufweist, die zu Langlöchern (29) erweitert sind.

12. Vorrichtung nach Anspruch 2, dadurch gekennzeichnet, daß im Bereich der Trennebene (17) der beiden Formhälften (1,6) sich nach innen verengende, die Trennebene (17) übergreifende Nuten (30), vorzugsweise in Ringform angeordnet sind, in welche Verbindungsglieder (31), in gleicher geometrischer Form wie die Nuten (30), durch ein Bewegungselement (32) ein- und ausbringbar sind.

13. Vorrichtung nach Anspruch 2, dadurch gekennzeichnet, daß an der unteren Formhälfte (6) ein Angußkopf (33) und ein Abtrennschieber (34) angeordnet sind.

14. Vorrichtung nach einem oder mehreren Ansprüchen 2 bis 13, dadurch gekennzeichnet, daß die Antriebsaggregate (35) von der Steuerzentrale (18) aus zeitlich steuerbar sind.
